# EUROPÄISCHE PATENTSCHRIFT

(11) **EP 1 500 420 B1**
(45) Veröffentlichungstag und Bekanntmachung des Hinweises auf die Patenterteilung: **21.02.2007**
(21) Anmeldenummer: 03015075.9
(22) Anmeldetag: 03.07.2003
(51) Int. Cl.: B01D 29/90

(54) **Filter für Anschwemmfiltration, Einlaufverteiler für einen solchen Filter sowie Verfahren zur Regulierung der Strömung in einem solchen Filter**
Filter for pre-coat filtration, inlet distributor for such a filter and method for controlling the flow in such a filter
Filtre pour la filtration à précouche, Distributeur d' alimentation pour un tel filtre et Méthode de contrôle de l' écoulement dans un tel filtre

(43) Veröffentlichungstag der Anmeldung: 26.01.2005
(73) Patentinhaber: Filtrox AG, 9000 St. Gallen (CH)
(72) Erfinder: Loser, Werner, 9242 Oberuzwil (CH); Gans, Ulrich, 9214 Kradolf-Schönenberg (CH)
(74) Vertreter: Müller, Christoph Emanuel

(56) Entgegenhaltungen:
- WO-A-96/14129
- WO-A-03/024563
- DE-A- 10 005 828
- US-A- 6 076 956

## Beschreibung

Die Erfindung betrifft einen Filter für die Anschwemmfiltration, einen Einlaufverteiler für einen solchen Filter sowie ein Verfahren zur Regulierung des Strömungsverhaltens in einem solchen Filter. Derartige Anschwemmfilter werden vor allem zur Filtration und Stabilisierung von Getränken und flüssigen Lebensmitteln, insbesondere Bier, eingesetzt.

Ein solcher Filter beinhaltet einen Filterkessel, in welchem sich die Filterelemente befinden. In der Regel handelt es sich hierbei um kerzenförmige Filterelemente, sog. Filterkerzen, welche die für die Filtration wirksame Trennfläche von Filtratraum und Unfiltratraum bilden. Zumeist sind derartige Filterelemente an einer Lochplatte befestigt; alternative Konstruktionen sind jedoch möglich. Die eigentliche Filtration bzw. Stabilisierung wird bewirkt durch eine Anschwemmschicht von Filterhilfsmitteln oder Stabilisierungsmitteln, beispielsweise Kieselgur oder Polyvinylpolypyrollidon (PVPP), welche oftmals aus Partikeln unterschiedlicher Grösse und Gewicht bestehen, auf den Filterelementen. Dem gleichmässigen Aufbau und der gleichmässigen Stärke der Anschwemmschicht auf der gesamten Fläche der Filterelemente kommt für die Wirksamkeit des Filters entscheidende Bedeutung zu. Daher ist stets eine homogene Verteilung der Filterhilfsmittel oder Stabilisierungsmittel während des Anschwemmvorgangs angestrebt; wesentlich hierfür ist unter anderem eine geeignet eingestellte Strömung innerhalb des Unfiltratraums. Nach erfolgter Anschwemmung der Filterelemente wird ebenfalls durch den Einlaufverteiler das zu filtrierende Medium plus eventuell Filterhilfsmittel oder Stabilisierungsmittel eingetragen, wobei auch hierbei eine im Sinne der gleichmässigen Beaufschlagung der Filterelemente vorteilhafte Strömungsbeeinflussung gewünscht ist. Zur Reinigung des Filters wird ein Reinigungsmedium in den Filter eingebracht, wobei die Zufuhr des Reinigungsmediums unter anderem auch über den Einlaufverteiler erfolgen kann. Die jeweils vorteilhaften Strömungscharakteristiken sind durchaus je nach beschriebenem Vorgang unterschiedlich.

Die Strömungscharakteristik wird bei allen genannten Vorgängen massgeblich durch den Einlaufverteiler bestimmt. Einlaufverteiler sind in grosser Vielzahl, z.B. aus den Dokumenten CH-A5-688265, WO 03/024563, WO 96/14129 WO 03/024563, DE 100 05 828 sowie DE-A1-100 05 828 bekannt.

Allen bisher bekannten Einlaufverteilern ist nachteilig gemeinsam, dass - wenn überhaupt - nur in sehr begrenztem Ausmass Einfluss auf die einmal durch die Konstruktion des Einlaufverteilers festgelegte Strömungscharakteristik genommen werden kann. Dies macht aufwändige Umrüstungen bzw. gar einen kompletten Austausch des Einlaufverteilers notwendig, falls Änderungen der Strömungscharakteristik gewünscht oder notwendig sind. Insbesondere ist es bisher nicht möglich, die Strömungscharakteristik ohne Eingriff ins Innere des Filterkessels massgeblich zu beeinflussen.

Es ist daher eine Aufgabe der Erfindung, die Nachteile des bekannten zu vermeiden, insbesondere einen Filter für die Anschwemmfiltration und einen Einlaufverteiler bereitzustellen, bei welchen mit geringem operativem Aufwand und hoher Variabilität Anpassungen der Strömungscharakteristik vorgenommen werden können. Darüber hinaus ist es eine weitere Aufgabe der Erfindung, Eingriffe ins Innere des Filters zur Anpassung der Strömungscharakteristik zu vermeiden. Es ist zudem eine weitere Aufgabe der Erfindung, einen Filter für die Anschwemmfiltration und einen Einlaufverteiler bereitzustellen, welcher darüber hinaus einfach und kostengünstig herstellbar ist und welcher zu gängigen Anlagen kompatibel und möglichst universell verwendbar ist.

Erfindungsgemäss werden diese Aufgaben durch einen Filter für die Anschwemmfiltration, einen Einlaufverteiler für einen solchen Filter und ein Verfahren zur Regulierung des Strömungsverhaltens mit den Merkmalen der unabhängigen Patentansprüche erreicht.

Ein erfindungsgemässer Filter für die Anschwemmfiltration beinhaltet einen Filterkessel mit einem Unfiltratraum, welcher in seinem unteren Bereich einen Einlaufverteiler mit Austrittsöffnungen aufweist, wobei der Einlaufverteiler derart konstruiert ist, dass die wirksame Anzahl und/oder der wirksame Querschnitt der Austrittsöffnungen von ausserhalb des Filterkessels variierbar sind.

Relative Ortsangaben wie "oben" oder "unten" beziehen sich hier und im folgenden auf einen Filter in einer aufrechten Betriebsposition. Unter dem Begriff Einlaufverteiler werden hier und im folgenden alle Vorrichtungen und/oder Teile solcher Vorrichtungen verstanden, welche dem Einbringen eines zu filtrierenden Mediums in den Unfiltratraum dienen. Als nicht zum Einlaufverteiler gemäss dieser Definition gehörend werden insbesondere Vorrichtungen verstanden, welche ausschliesslich dem Trubaustrag dienen. Unter der "wirksamen" Anzahl der Austrittsöffnungen wird hier und im folgenden die jeweils effektiv für den Durchtritt eines einzutragenden Mediums zur Verfügung stehende Anzahl der Austrittsöffnungen verstanden. Unter dem "wirksamen" Querschnitt einer Austrittsöffnung wird hier und im folgenden der jeweils für den Durchtritt eines einzutragenden Mediums aus dem Einlaufverteiler ins Innere des Filterkessels effektiv zur Verfügung stehende Querschnitt einer Austrittsöffnung verstanden.

Die Erfindung ermöglicht es insbesondere, Austrittsöffnungen ganz oder teilweise von ausserhalb des Filterkessels zu öffnen und zu verschliessen. Die Austrittsöffnungen können eine beliebige Form haben, z.B. als Löcher oder Schlitze ausgebildet sein. Selbstverständlich ist es erfindungsgemäss auch möglich, unabhängig voneinander in verschiedenen Bereichen des Einlaufverteilers unterschiedliche Einstellungen der Austrittsöffnungen vorzusehen. Durch die Variierbarkeit der wirksamen Anzahl und/oder des wirksamen Querschnitts der Austrittsöffnungen von ausserhalb des Filterkessels ist eine hohe und besonders einfache Beeinflussbarkeit der Strömungscharakteristik gewährleistet. Selbstverständlich können die Austrittsöffnungen in beliebige Raumrichtungen gerichtet sein; die Erfindung ist keineswegs auf Austrittsöffnungen parallel zur Längsachse des Filters oder senkrecht zur Längsachse des Filters zu beschränken. Gemäss der Erfindung sind nunmehr keine aufwändigen Eingriffe ins Innere des Filterkessels notwendig, wodurch Anpassungen der Strömungscharakteristik schneller, effizienter und kostengünstiger durchgeführt werden können.

Gemäss einer bevorzugten Ausführungsform der Erfindung ist die Variation der wirksamen Anzahl und/oder des wirksamen Querschnitts der Austrittsöffnungen durch zumindest teilweise Abdekkung von Austrittsöffnungen bewirkbar. Unter Abdeckung wird hier und im folgenden das Vorsehen jeglicher Vorrichtungen verstanden, welche den Durchtritt eines einzutragenden Mediums durch die Austrittsöffnungen zumindest teilweise verhindern. Die zumindest teilweise Abdeckung von Austrittsöffnungen kann hierbei selbstverständlich sowohl vom Innern des Einlaufverteilers als auch von einer dem Filterkessel zugewandten Fläche des Einlaufverteilers her erfolgen.

In einer besonders bevorzugten Ausführungsform weist der Einlaufverteiler zumindest ein von ausserhalb des Filterkessels dreh- und/oder verschiebbares Reguliersegment zur zumindest teilweisen Abdeckung von Austrittsöffnungen auf. Unter Reguliersegmenten werden hier und im folgenden jegliche Vorrichtungen verstanden, mittels welchen eine zumindest teilweise Abdeckung von Austrittsöffnungen bewirkbar ist; ein solches Reguliersegment kann selbstverständlich sowohl im Innern des Einlaufverteilers als auch auf einer dem Filterkessel zugewandten Fläche des Einlaufverteilers angeordnet sein. Erfindungsgemäss können Öffnungen des Reguliersegments derart mit Öffnungen des Grundkörpers des Einlaufverteilers in zumindest teilweise Überlappung gebracht werden, dass der Durchtritt eines einzutragenden Mediums ermöglicht bzw. verhindert werden kann sowie der Durchfluss u.a. über den Grad der Überlappung der genannten Öffnungen beeinflussbar ist. Mehrere derartige Reguliersegmente können selbstverständlich insbesondere auch unabhängig voneinander verstellbar in verschiedenen Bereichen des Einlaufverteilers vorgesehen sein. Im Falle von drehbaren Reguliersegmenten erfolgt die Drehbewegung vorzugsweise um eine Achse parallel zur Längsachse oder entlang der Längsachse des Filters im Betriebszustand; im Falle von verschiebbaren Reguliersegmenten erfolgt die Verschiebung vorzugsweise entlang einer Achse parallel zur Längsachse oder entlang der Längsachse des Filters im Betriebszustand. Vorzugsweise sind derartige Reguliersegmente aus dem gleichen Material gebildet wie der Grundkörper des Einlaufverteilers. Besonders bevorzugt können Führungselemente und insbesondere wartungsfreie Lagermittel vorgesehen sein, welche eine leichte und dauerhafte Verstellbarkeit der Reguliersegmente mit hoher Präzision gewährleisten. Vorzugsweise sind derartige Reguliersegmente in direktem, insbesondere flächigem Kontakt mit dem Grundkörper des Einlaufverteilers angeordnet; der Kontakt kann insbesondere auch durch Spannmittel wie z.B. Schrauben und/oder Federn dauerhaft gewährleistet sein. Hierdurch kann vorzugsweise unter üblichen Betriebsbedingungen ein ausreichend flüssigkeitsdichter Verbindungsbereich zwischen dem Grundkörper des Einlaufverteilers und dem Reguliersegment bewirkt werden. Derartige Reguliersegmente können besonders bevorzugt durch rein mechanische Mittel und/oder beispielsweise auch elektrisch oder pneumatisch, insbesondere mit Stellmotoren in die vorgesehene Position bewegt werden.

In einer bevorzugten Ausführungsform der Erfindung ist das Drehen und/oder Verschieben des Reguliersegments mittels eines Gestänges bewirkbar. Ein derartiges Gestänge ist vorzugsweise mit dem Reguliersegment kraftschlüssig, insbesondere einstückig verbunden. Besonders bevorzugt ist das Gestänge im wesentlichen durch das Innere des Einlaufverteilers geführt und in einem unteren Bereich des Filters von Aussen zugänglich. Vorzugsweise ist das Gestänge zumindest teilweise als Gewindestange ausgebildet. Durch Dreh- und/oder Hubbewegungen kann über das Gestänge besonders einfach die Position des Reguliersegments verändert werden, ohne dass ein Eingriff in das Innere des Filterkessels nötig ist. Die Betätigung des Gestänges kann selbstverständlich sowohl rein mechanisch als auch elektrisch oder pneumatisch, insbesondere mit Stellmotoren erfolgen. Zur Fixierung einer gewählten Position des Reguliersegments kann zudem eine Haltevorrichtung, inbesondere eine Spannvorrichtung, beispielsweise eine Kontermutter vorgesehen sein.

In einer weiteren, besonders bevorzugten Ausführungsform ist es zudem vorgesehen, dass mittels des Reguliersegments auch der Winkel zwischen den Austrittsöffnungen und der Längsachse des Filters von ausserhalb des Filterkessels variierbar ist. Beispielsweise kann das Reguliersegment derart ausgebildet sein, dass es ein insbesondere gradzahliges Vielfaches an Öffnungen aufweist in Relation zum Grundkörper des Einlaufverteilers. Indem verschiedene Sätze von Öffnungen des Reguliersegments, welche selektiv mit Öffnungen des Grundkörpers des Einlaufverteilers in zumindest teilweise Überlappung gebracht werden können, verschiedene Winkel relativ zur Längsachse des Filters aufweisen, kann sowohl die Austrittsrichtung (über den genannten Winkel zwischen den Austrittsöffnungen und der Längsachse des Filters) als auch das Austrittsvolumen (über den Grad der Überlappung der Öffnungen des Reguliersegments und des Grundkörpers des Einlaufverteilers) eines einzutragenden Mediums von ausserhalb des Filterkessels variiert werden.

Gemäss einer bevorzugten Ausführungsform ist das Reguliersegment dreh- und/oder verschiebbar im Bereich des oberen Abschlusses des Einlaufverteilers angeordnet. Besonders bevorzugt ist das Reguliersegment sowohl dreh- als auch verschiebbar ausgebildet. Hierdurch können einerseits sowohl durch die Drehung insbesondere verschiedenartige Öffnungen des Reguliersegments mit Öffnungen des Grundkörpers des Einlaufverteilers in zumindest teilweise Überlappung gebracht werden. Andererseits kann zudem durch eine Hubbewegung das Reguliersegment im Bereich des oberen Abschlusses des Einlaufverteilers angehoben werden, wodurch ein zusätzlicher seitlicher Austrittsspalt in besonderen Betriebssituationen freigegeben werden kann, z.B. zur Reinigung (sauberes Ausspühlen aller Spalten). Der Bereich des oberen Abschlusses des Einlaufverteilers kann hierbei selbstverständlich beliebig ausgebildet sein, insbesondere planflächig oder mit einer erhabenen Struktur, beispielsweise also auch kegel- oder kegelstumpfförmig. Erhabene Strukturen des oberen Abschlusses des Einlaufverteilers, welche im wesentlichen keine grösseren Flächen senkrecht zur Längsachse des Filters aufweisen, haben sich als besonders vorteilhaft insbesondere beim Trubaustrag erwiesen, da sedimentierende Feststoffe sich nicht auf dem Einlaufverteiler ablagern können, sondern abrutschen und ausgetragen werden können. Es ist aber auch denkbar, mit dem Reguliersegment die nach oben gerichteten Austrittsöffnungen ganz zu verschliessen, so dass kein Austritt des Mediums nach oben erfolgt.

In einer weiteren, besonders bevorzugten Ausführungsform ist das Reguliersegment dreh- und/oder verschiebbar in einem seitlichen Bereich des Einlaufverteilers angeordnet; eine Kombination mit einem im Bereich des oberen Abschlusses des Einlaufverteilers angeordneten Reguliersegments ist hierbei selbstverständlich erfindungsgemäss möglich. Wesentlich ist, dass Öffnungen des Reguliersegments mit Öffnungen des Grundkörpers des Einlaufverteilers in zumindest teilweise Überlappung gebracht werden können; selbstverständlich können wiederum auch verschiedene Sätze von Öffnungen am Reguliersegment vorgesehen sein. Die Verstellung kann sowohl durch eine Drehbewegung des Reguliersegments vorzugsweise um eine Achse parallel zur Längsachse oder entlang der Längsachse des Filters im Betriebszustand erfolgen als auch durch eine Verschiebung vorzugsweise entlang einer Achse parallel zur Längsachse oder entlang der Längsachse des Filters im Betriebszustand. Das Reguliersegement kann selbstverständlich im Innern des Einlaufverteilers oder auch auf einer dem Filterkessel zugewandten Fläche des Einlaufverteilers vorgesehen sein.

In einer bevorzugten Ausführungsform der Erfindung ist ein solches Reguliersegment als ein mit Öffnungen versehener Hohlzylinder ausgebildet. Ein derartiges Reguliersegment in Form eines Hohlzylinders befindet sich vorzugsweise im Innern des Einlaufverteilers und ist kraftschlüssig und/oder einstückig mit einem Verstellmittel, insbesondere einem Gestänge verbunden, welches die Bedienung von ausserhalb des Filterkessels ermöglicht. Vorzugsweise befindet sich auch ein solches hohlzylindrisches Reguliersegment in direktem, insbesondere flächigem Kontakt mit dem Grundkörper des Einlaufverteilers. Es können jedoch selbstverständlich auch Führungselemente und/oder insbesondere wartungsfreie Lagermittel vorgesehen sein, welche eine dauerhafte und leichte Verstellbarkeit mit hoher Präzision gewährleisten.

Die Erfindung ist bisher stets im Gesamtzusammenhang seiner Verwendung in einem Filter für die Anschwemmfiltration beschrieben worden. Sämtliche genannten Spezifikationen des Einlaufverteilers und die damit verbundenen Vorteil gelten natürlich in gleicher Weise auch für einen erfindungsgemässen Einlaufverteiler als solchen.

Die Erfindung betrifft weiters ein Verfahren zur Regulierung der Strömung innerhalb eines Filters für die Anschwemmfiltration, wobei die wirksame Anzahl und/oder der wirksame Querschnitt von Austrittsöffnungen eines Einlaufverteilers von ausserhalb des Filterkessels variiert werden.

Die Erfindung wird im folgenden anhand von Zeichnungen und Ausführungsbeispielen näher erläutert, ohne dass der Gegenstand der Erfindung auf diese zu beschränken wäre. Es zeigen:
- Fig. 1:: Filter mit Einlaufverteiler und Reguliersegment im Bereich des oberen Abschlusses des Einlaufverteilers; Einlaufverteiler mit lochförmigen Austrittsöffnungen.
- Fig. 2:: Filter mit Einlaufverteiler und Reguliersegment im Bereich des oberen Abschlusses des Einlaufverteilers; Einlaufverteiler mit Austrittsspalten.
- Fig. 3:: Einlaufverteiler mit hohlzylindrischem Reguliersegment in einem seitlichen Bereich.
- Fig. 4:: Draufsicht auf einen Einlaufverteiler mit Reguliersegment.

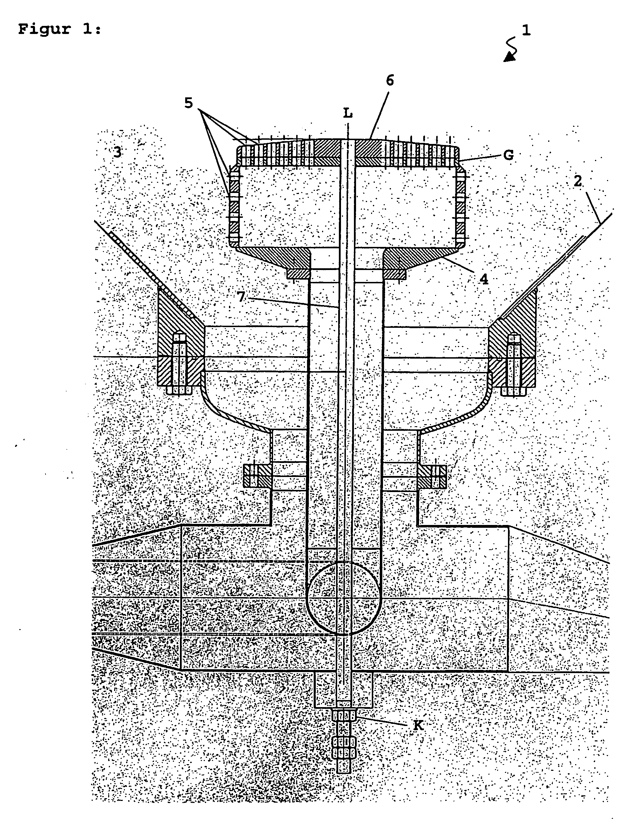

Figur 1 zeigt einen erfindungsgemässen Filter 1 für die Anschwemmfiltration mit einem Filterkessel 2 in einem Ausschnitt im Bereich des Einlaufverteilers 4, welcher in den Unfiltratraum 3 hineinragt. Der Einlaufverteiler 4 weist in dem gezeigten Beispiel sowohl im Bereich des oberen Abschlusses als auch im seitlichen Bereich lochförmige Austrittsöffnungen 5 auf. Im oberen Bereich des Einlaufverteilers 4 ist ein Reguliersegment 6 vorgesehen, welches ebenfalls Austrittsöffnungen 5 aufweist. Das Reguliersegment 6 ist in diesem Ausführungsbeispiel um die Längsachse L des Einlaufverteilers 4 drehbar ausgebildet, so dass die lochförmigen Austrittsöffnungen 5 des Grundkörpers G des Einlaufverteilers 4 mit den Austrittsöffnungen 5 des Reguliersegments 6 zumindest in teilweise Überlappung gebracht werden können. Besonders bevorzugt sind die Austrittsöffnungen 5 derart angeordnet, dass alle Positionen zwischen vollständiger Abdekkung der Austrittsöffnungen 5 des Grundkörpers G und vollständiger Überlappung dieser Austrittsöffnungen 5 mit den Austrittsöffnungen 5 des Reguliersegments 6 einregelbar sind. Die Drehung des Reguliersegments 6 wird in dem Ausführungsbeispiel durch ein Gestänge 7, vorzugsweise eine Gewindestange bewirkt. Das Gestänge 7 ist bevorzugt im wesentlichen im Innern des Einlaufverteilers 4 geführt und in einem unteren Bereich des Filters 1 von aussen zugänglich. Durch Drehung an dem Gestänge 7 ist eine Veränderung der relativen Positionierung des Reguliersegments 6 zu dem Grundkörper G des Einlaufverteilers 4 erzielbar, ohne dass ein manueller Eingriff in das Innere des Filterkessels 2 vorgenommen werden müsste. Vorzugsweise wird die gewählte Position des Reguliersegments durch Festziehen einer Kontermutter K fixiert. Selbstverständlich können Drehungen des Gestänges 7 sowohl rein manuell als auch beispielsweise elektrisch oder pneumatisch, insbesondere mit Stellmotoren bewirkt werden. Zur Gewährleistung einer dauerhaften Drehbarkeit können im Bereich des Gestänges 7 und/oder des Kontaktbereiches zwischen Grundkörper G und Reguliersegment 6 Lagermittel vorgesehen sein, ggf. in Verbindung mit Dichtmitteln, insbesondere O-Ringen. Insbesondere ist es erfindungsgemäss möglich, durch eine Anhebung des Reguliersegments 6 mittels des Gestänges 7 einen Spalt zwischen dem Reguliersegment 6 und dem Grundkörper G des Einlaufverteilers 4 zu erzeugen, wobei auch eine solche Positionierung beispielsweise über einen Kontermutter K fixiert werden kann. Hierdurch kann für besondere Betriebszustände, z.B. zur Reinigung eine weitere, insbesondere grosse Austrittsöffnung bereitgestellt werden. In dem gezeigten Ausführungsbeispiel sind die Austrittsöffnungen 5 parallel zur Längsachse L des Filters 1 angeordnet. Besonders vorteilhaft ist es jedoch auch möglich, dass die Austrittsöffnungen 5 bzw. die Längsachse der Austrittsöffnungen 5 in einem spitzen Winkel zur Längsachse L angeordnet sind. Unter einem spitzen Winkel werden hierbei eingeschlossene Winkel zwischen 0° und 90° verstanden, insbesondere typischerweise zwischen 5° und 50° verstanden. Hierbei ist es möglich, einen gleichen Winkel sowohl zwischen den Austrittsöffnungen 5 des Grundkörper G und der Längsachse L als auch den Austrittsöffnungen 5 des Reguliersegments 6 und der Längsachse L vorzusehen. Besonders bevorzugt sind allerdings die Austrittsöffnungen 5 des Grundkörpers G des Einlaufverteilers 4 parallel zur Längsachse L ausgerichtet, wodurch der Grundkörper besonders einfach herstellbar ist. Lediglich die Austrittsöffnungen 5 des Reguliersegments 6 weisen dann den beschriebenen spitzen Winkel auf, wodurch eine Umlenkung und Ausrichtung des einzutragenden Mediums im Bereich des Übergangs zwischen Grundkörper G und Reguliersegment 6 bewirkt wird. Es hat sich insbesondere gezeigt, dass es besonders vorteilhaft ist, wenn die Winkel zwischen verschiedenen Austrittsöffnungen 6 des Reguliersegments und der Längsachse L um so spitzer sind, je näher die Austrittsöffnung 5 der Längsachse L benachbart ist; hierdurch kann ein besonders gleichmässiges Strömungsverhalten im Filterkessel 2 bewirkt werden. In dem gezeigten Ausführungsbeispiel ist der obere Abschluss des Einlaufverteilers 4 durch das Reguliersegment 6 in Form eines Kegelstumpfes ausgebildet. Hierdurch können weitgehend Ablagerungen durch sedimentierende Partikel während der Filtration und beim Trubaustrag vermieden werden.

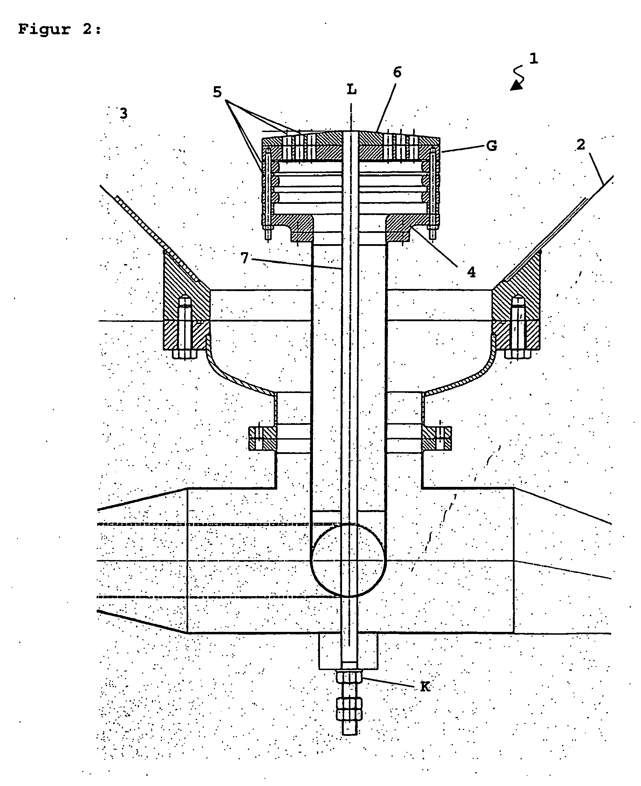

Figur 2 zeigt eine weitere Ausgestaltung der Erfindung in weitgehender Analogie zu dem in Figur 1 gezeigten Ausführungsbeispiel, wobei hier jedoch ein Einlaufverteiler 4 gezeigt ist, welcher aus Ringscheiben aufgebaut ist. Diese Ausgestaltung verdeutlicht, dass die Erfindung keinesfalls auf mit Bohrungen bzw. lochförmigen Austrittsöffnungen 5 versehenen Einlaufverteiler 4 bzw. auch Reguliersegmente zu beschränken ist.

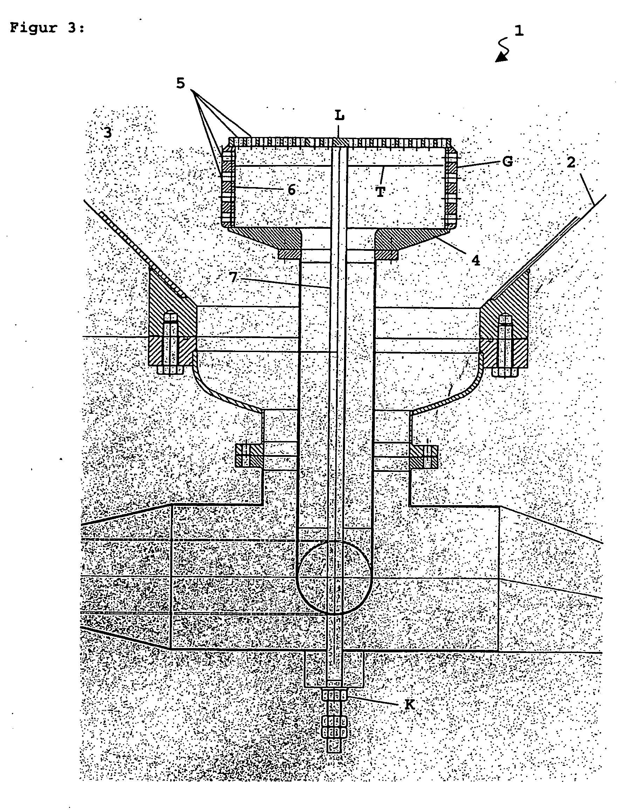

Figur 3 zeigt einen erfindungsgemässen Filter 1 für die Anschwemmfiltration mit einem Filterkessel 2 in einem Ausschnitt im Bereich des Einlaufverteilers 4, welcher in den Unfiltratraum 3 hineinragt. Der Einlaufverteiler 4 weist in dem gezeigten Beispiel sowohl im Bereich des oberen Abschlusses als auch im seitlichen Bereich lochförmige Austrittsöffnungen 5 auf. In einem seitlichen Bereich des Einlaufverteilers 4 ist ein hohlzylindrisches Reguliersegment 6 vorgesehen, welches ebenfalls Austrittsöffnungen 5 aufweist. Das Reguliersegment 6 ist in diesem Ausführungsbeispiel um die Längsachse L des Einlaufverteilers 4 drehbar ausgebildet, so dass die lochförmigen Austrittsöffnungen 5 des Grundkörpers G des Einlaufverteilers 4 mit den Austrittsöffnungen 5 des Reguliersegments 6 zumindest in teilweise Überlappung gebracht werden können. Besonders bevorzugt sind die Austrittsöffnungen 5derart angeordnet, dass alle Positionen zwischen vollständiger Abdeckung der Austrittsöffnungen 5 des Grundkörpers G und vollständiger Überlappung dieser Austrittsöffnungen mit den Austrittsöffnungen 5 des Reguliersegments 6 einregelbar sind. Die Drehung des Reguliersegments 6 wird in dem Ausführungsbeispiel durch ein Gestänge 7, vorzugsweise eine Gewindestange bewirkt. Das Gestänge 7 ist kraftschlüssig und/oder einstückig durch Tragmittel T mit dem hohlzylindrischen Reguliersegment 6 verbunden. Das Gestänge 7 ist bevorzugt im wesentlichen im Innern des Einlaufverteilers 4 geführt und in einem unteren Bereich des Filters 1 von aussen zugänglich. Die Justierung und Fixierung des Gestänges 7 kann wie bereits in der Beschreibung zu Figur 1 erläutert erfolgen. Zur Gewährleistung einer dauerhaften Drehbarkeit können insbesondere im Bereich des Gestänges 7 und/oder des Kontaktbereiches zwischen Grundkörper G und Reguliersegment 6 Lagermittel vorgesehen sein, ggf. in Verbindung mit Dichtmitteln, insbesondere O-Ringen. In dem gezeigten Ausführungsbeipsiel ist das Reguliersegment 6 um die Längsachse L drehbar ausgebildet. Selbsverständlich könnte das Reguliersegment 6 jedoch auch und insbesondere zusätzlich entlang der Längsachse verschiebbar ausgebildet sein.

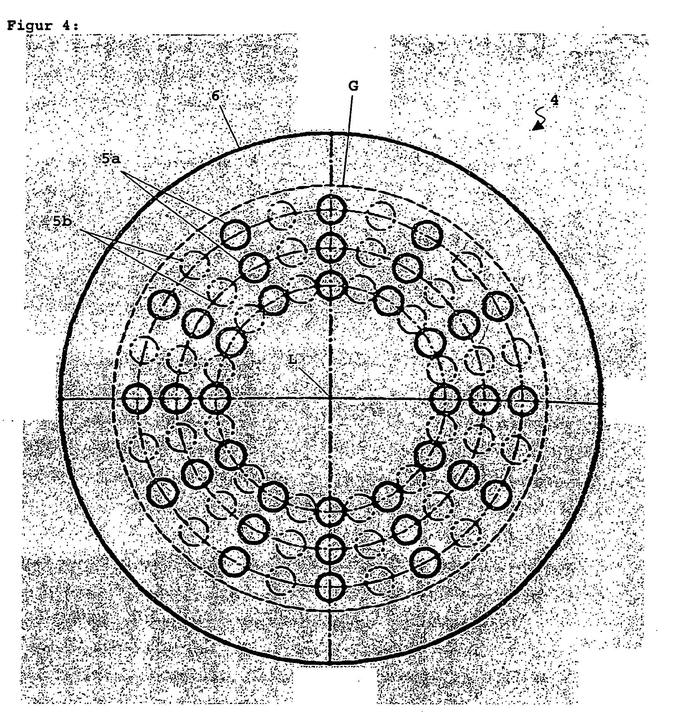

In Figur 4 ist ein erfindungsgemässer Einlaufverteiler 4 mit einem Reguliersegment 6 in der Draufsicht entlang der Längsachse L gezeigt. In der Draufsicht unterhalb des Reguliersegments 6 ist der Grundkörper G des Einlaufverteilers 4 angeordnet. Das Reguliersegment 6 weist Austrittsöffnungen 5a auf, und der Grundkörper G des Einlaufverteilers 4 weist Austrittsöffnungen 5b auf, welche strichpunktiert gezeigt sind. Durch Drehung des Reguliersegments 6 um die Längsachse L des Einlaufverteilers 4 können die Austrittsöffnungen 5a und 5b in zumindest teilweise Überlappung gebracht werden. Besonders bevorzugt sind alle Positionierungen zwischen vollständiger Überlappung der Austrittsöffnungen 5a und 5b und vollständiger Abdeckung der Austrittsöffnungen 5b einstellbar. Die Erfindung ist hierbei nicht auf Austrittsöffnungen 5a und 5b in der Form von kreisförmigen Bohrungen bzw. Löchern zu beschränken. Selbstverständlich können beispielsweise auch auf einer Fluchtlinie von der Längsachse L zum Aussenrand des Einlaufverteilers 4 angeordnete Austrittsöffnungen 5 zusammengefasst sein und insbesondere auch in der Form von Kreissegmenten ausgebildet sein. In dem gezeigten Ausführungsbeispiel entspricht die Anzahl der Austrittsöffnungen 5a exakt der Anzahl der Austrittsöffnungen 5b. Selbstverständlich ist es erfindungsgemäss aber auch möglich, insbesondere ein gradzahliges Vielfaches an Austrittsöffnungen 5a in Relation zu den Austrittsöffnungen 5 vorzusehen. Wenn beispielsweise zwei Sätze von Austrittsöffnungen 5a nutzbar sind, so können hierdurch beispielsweise für besondere Betriebssituationen besondere Austrittswinkel eingestellt werden, ohne dass die Gesamtkonstruktion geändert oder ein manueller Eingriff in das Innere des Filterkessels vorgenommen werden müsste.

## Patentansprüche

1. Filter (1) für die Anschwemmfiltration, beinhaltend einen Filterkessel (2) mit einem Unfiltratraum (3), welcher in seinem unteren Bereich einen Einlaufverteiler (4) mit Austrittsöffnungen (5) aufweist,
**dadurch gekennzeichnet, dass** der Einlaufverteiler (4) derart konstruiert ist, dass die wirksame Anzahl und/oder der wirksame Querschnitt der Austrittsöffnungen (5) von ausserhalb des Filterkessels (2) variierbar sind.

2. Filter (1) nach Anspruch 1,
**dadurch gekennzeichnet, dass** die Variation der Anzahl
und/oder des wirksamen Querschnitts der Austrittsöffnungen (5) durch zumindest teilweise Abdeckung von Austrittsöffnungen (5) bewirkbar ist.

3. Filter (1) nach einem der Ansprüche 1 bis 2,
**dadurch gekennzeichnet, dass** der Einlaufverteiler (4) zumindest ein von ausserhalb des Filterkessels (2) dreh- und/oder verschiebbares Reguliersegment (6) aufweist.

4. Filter (1) nach Anspruch 3,
**dadurch gekennzeichnet, dass** das Verdrehen und/oder Verschieben des Reguliersegments (6) mittels eines Gestänges (7) bewirkbar ist.

5. Filter (1) nach einem der Ansprüche 1 bis 4,
**dadurch gekennzeichnet, dass** mittels des Reguliersegments der Winkel zwischen Austrittsöffnungen (5) und der Längsachse (L) des Filters (1) von ausserhalb des Filterkessels variierbar ist.

6. Filter (1) nach einem der Ansprüche 3 bis 5,
**dadurch gekennzeichnet, dass** das Reguliersegment (6) dreh- und/oder verschiebbar im Bereich des oberen Abschlusses des Einlaufverteilers (4) angeordnet ist.

7. Filter (1) nach einem der Ansprüche 3 bis 5,
**dadurch gekennzeichnet, dass** das Reguliersegment (6) verdreh- und/oder verschiebbar in einem seitlichen Bereich des Einlaufverteilers (4) angeordnet ist.

8. Filter (1) nach Anspruch 7,
**dadurch gekennzeichnet, dass** das Reguliersegment (6) als mit Öffnungen versehener Hohlzylinder (6) ausgebildet ist.

9. Einlaufverteiler (4) für einen Filter (1) für die Anschwemmfiltration,
**dadurch gekennzeichnet, dass** der Einlaufverteiler (4) derart konstruiert ist, dass die wirksame Anzahl und/oder der wirksame Querschnitt der Austrittsöffnungen (5) von ausserhalb des .Filterkessels (2) variierbar sind.

10. Verfahren zur Regulierung der Strömung innerhalb eines Filters (1) für die Anschwemmfiltration,
**dadurch gekennzeichnet, dass** die wirksame Anzahl und/oder der wirksame Querschnitt von Austrittsöffnungen (5) eines Einlaufverteilers (4) von ausserhalb des Filterkessels (2) variiert werden.

## Claims

1. Filter (1) for precoat filtration, comprising a filtering tank (2) with a non-filtrate space (3), which has in its lower region an inlet distributor (4) with outlet openings (5), **characterized in that** the inlet distributor (4) is designed in such a way that the effective number and/or the effective cross section of the outlet openings (5) can be varied from outside the filtering tank (2).

2. Filter (1) according to Claim 1, **characterized in that** the variation of the number and/or the effective cross section of the outlet openings (5) can be brought about by at least partial coverage of outlet openings (5).

3. Filter (1) according to either of Claims 1 and 2, **characterized in that** the inlet distributor (4) has at least one regulating segment (6) which can be turned and/or displaced from outside the filtering tank (2).

4. Filter (1) according to Claim 3, **characterized in that** the turning and/or displacing of the regulating segment (6) can be brought about by means of a linkage (7).

5. Filter (1) according to one of Claims 1 to 4, **characterized in that** the angle between outlet openings (5) and the longitudinal axis (L) of the filter (1) can be varied from outside the filtering tank by means of the regulating segment.

6. Filter (1) according to one of Claims 3 to 5, **characterized in that** the regulating segment (6) is arranged such that it can be turned and/or displaced in the region of the upper termination of the inlet distributor (4).

7. Filter (1) according to one of Claims 3 to 5, **characterized in that** the regulating segment (6) is arranged such that it can be turned and/or displaced in a lateral region of the inlet distributor (4).

8. Filter (1) according to Claim 7, **characterized in that** the regulating segment (6) is formed as a hollow cylinder (6) provided with openings.

9. Inlet distributor (4) for a filter (1) for precoat filtration, **characterized in that** the inlet distributor (4) is designed in such a way that the effective number and/or the effective cross section of the outlet openings (5) can be varied from outside the filtering tank (2).

10. Method for regulating the flow within a filter (1) for precoat filtration, **characterized in that** the effective number and/or the effective cross section of outlet openings (5) of an inlet distributor (4) are varied from outside the filtering tank (2).

## Revendications

1. Filtre (1) pour la filtration à précouche, contenant un récipient filtrant (2) avec une espace pour produit non filtrée (3) qui présente, dans sa région inférieure, un distributeur d'entrée (4) avec des ouvertures de sortie (5),
**caractérisé en ce que** le distributeur d'entrée (4) est construit de telle sorte que le nombre efficace et/ou la section transversale efficace des ouvertures de sortie (5) puissent être modifiés depuis l'extérieur du récipient filtrant (2).

2. Filtre (1) selon la revendication 1,
**caractérisé en ce que** la modification du nombre et/ou de la section transversale efficace des ouvertures de sortie (5) peuvent être atteinte en recouvrant au moins partiellement les ouvertures de sortie (5).

3. Filtre (1) selon l'une quelconque des revendications 1 à 2,
**caractérisé en ce que** le distributeur d'entrée (4) présente au moins un segment de régulation (6) pouvant être tourné et/ou déplacé depuis l'extérieur du récipient filtrant (2).

4. Filtre (1) selon la revendication 3,
**caractérisé en ce que**
la rotation et/ou le déplacement du segment de régulation (6) peuvent s'effectuer au moyen d'une tringlerie (7).

5. Filtre (1) selon l'une quelconque des revendications 1 à 4,
**caractérisé en ce que** l'angle entre les ouvertures de sortie (5) et l'axe longitudinal (L) du filtre (1) peut être modifié depuis l'extérieur de la chaudière de filtre au moyen du segment de régulation.

6. Filtre (1) selon l'une quelconque des revendications 3 à 5,
**caractérisé en ce que** le segment de régulation (6) est disposé de manière à pouvoir être tourné et/ou déplacé dans la région de la fermeture supérieure du distributeur d'entrée (4).

7. Filtre (1) selon l'une quelconque des revendications 3 à 5,
**caractérisé en ce que** le segment de régulation (6) est disposé de manière à pouvoir être tourné et/ou déplacé dans une région latérale du distributeur d'entrée (4).

8. Filtre (1) selon la revendication 7,
**caractérisé en ce que** le segment de régulation (6) est réalisé sous forme de cylindre creux (6) pourvu d'ouvertures.

9. Distributeur d'entrée (4) pour un filtre (1) pour la filtration à précouche,
**caractérisé en ce que** le distributeur d'entrée (4) est construit de telle sorte que le nombre efficace et/ou la section transversale efficace des ouvertures de sortie (5) puissent être modifiés depuis l'extérieur du récipient filtrant (2).

10. Procédé de régulation de l'écoulement à l'intérieur d'un filtre (1) pour la filtration à précouche,
**caractérisé en ce que** le nombre efficace et/ou la section transversale efficace des ouvertures de sortie (5) d'un distributeur d'entrée (4) sont modifiés depuis l'extérieur du récipient filtrant (2).
